# EUROPÄISCHE PATENTSCHRIFT

(11) **EP 1 354 420 B1**
(45) Veröffentlichungstag und Bekanntmachung des Hinweises auf die Patenterteilung: **20.02.2008**
(21) Anmeldenummer: 02708171.0
(22) Anmeldetag: 26.01.2002
(51) Int. Cl.: H04B 1/38

(54) **FREISPRECHEINRICHTUNG FÜR DEN BETRIEB VON MOBILTELEFONEN IN KRAFTFAHRZEUGEN**
HANDSFREE TALKING DEVICE FOR OPERATING MOBILE TELEPHONES IN MOTOR VEHICLES
DISPOSITIF MAINS LIBRES POUR FAIRE FONCTIONNER DES TELEPHONES MOBILES DANS DES VEHICULES AUTOMOBILES

(30) Priorität: 28.01.2001 DE 10103609
(43) Veröffentlichungstag der Anmeldung: 22.10.2003
(73) Patentinhaber: Audioton Kabelwerk GmbH Zweigniederlassung Scheinfeld, 91443 Scheinfeld (DE)
(72) Erfinder: SCHLEGEL, Thomas, 90453 Nürnberg (DE)
(74) Vertreter: Lelgemann, Karl-Heinz
(86) Internationale Anmeldenummer: PCT/DE2002/000271
(87) Internationale Veröffentlichungsnummer: WO 2002/067448

(56) Entgegenhaltungen:
- WO-A-97/25223
- DE-A- 19 602 503
- DE-U- 20 002 209
- DE-U- 29 704 607

## Beschreibung

Die Erfindung betrifft eine Freisprecheinrichtung für den Betrieb von Mobiltelefonen in Kraftfahrzeugen nach dem Oberbegriff des Patentanspruchs 1.

Aus der DE 297 04 607 U1 ist eine Freisprecheinrichtung für Mobiltelefone bekannt, an die zusätzliche Anzeigevorrichtungen anschließbar sind.

Eine Freisprecheinrichtung ist aus der ADAC-Zeitschrift "Gute Fahrt", Heft 6/1998, als universell, nämlich als für die meisten handelsüblichen Mobiltelefone, (die auch sogenannten Handys) verwendbares Einbausystem mit optionalem Anschluss an das Autoradio zur Stummschaltung und Verwendung dessen Lautsprechers bekannt. Die vielseitige Verwendbarkeit dieses Systems beruht bei dieser bekannten Freisprecheinrichtung auf einer funktionalen Zweiteilung dahingehend, daß für die fahrzeugseitigen Anpassungen einschließlich der Steuerung der Freisprechkomponenten ein fahrzeugfest zu installierender Schnittstellenmodul mit Mikroprozessor vorgesehen ist, während alle gerätespezifischen Anforderungen (Ablaufprogramm und Daten) in einen Speicher im gerätespezifischen Stecker eines hier sogenannten Systemkabels ausgelagert sind, welches das Schnittstellenmodul mit einer gerätespezifisch schalenförmigen, in der Praxis Cradle genannten Halterung für das Mobiltelefon verbindet. Die Kommunikation zwischen diesen beiden Systemteilen besorgt der im Schnittstellenmodul enthaltene Mikroprozessor über zwei serielle Schnittstellen.

Der Nutzer braucht bei dieser bekannten Freisprecheinrichtung also lediglich zu seinem aktuell benutzten Mobiltelefon über eine dazu mechanisch passende Halterung samt elektrisch passendem Systemkabel zu verfügen, um diese im Fahrzeug installierte Freisprecheinrichtung nutzen zu können. Deshalb kann das zu benutzende Fahrzeug freizügig gewechselt bzw. ein Fahrzeug von verschiedenen Nutzern mit ihren unterschiedlichen Mobiltelefonen gefahren werden, ohne gegen die aktuellen Verbote des händischen Telefonierens im betriebsbereiten Kraftfahrzeug verstoßen zu müssen. Die gerätespezifische Halterung (Cradle) für die schocksichere Aufnahme des zugeordneten Mobiltelefons ist manuell leicht austauschbar auf einer fahrzeugfest montierten Montageeinheit verrastbar. Mit dem Anstecken des Systemkabels bzw. mit dem Starten des Motors bei angestecktem Kabel wird die Programmierung des Schnittstellenmoduls initiiert, also der gerätespezifische Betriebsdatensatz aus dem Systemkabel-Stecker in den Mikroprozessor geladen und dessen Programm dadurch gerätespezifisch abgearbeitet.

Bei den bekannten Freisprecheinrichtungen wird für den Betrieb im Privatmodus das Mobiltelefon aus der Halterung abgenommen. Dabei wird der externe Lautsprecher und das externe Mikrofon der Freisprecheinrichtung abgeschaltet und als Lautsprecher und Mikrofon ausschließlich der Hörer und das Mikrofon des Mobiltelefons aktiviert. Das Telefonieren im Privatmodus erfolgt dann über das Mobiltelefon, in der Hand gehalten, so daß der Lautsprecher des Hörers am Ohr und das Mikrofon nahe dem Mund des Benutzers ist. Diese Handhabung des Telefons ist im Kraftfahrzeug problematisch und ist insbesondere im betriebsbereiten Fahrzeug dem Fahrzeuglenker durch einschlägige Vorschriften in verschiedenen Ländern bereits verboten.

Eine ähnliche Freisprecheinrichtung für den Betrieb von Mobiltelefonen in Kraftfahrzeugen ist in der DE 196 02 503 A1 beschrieben, die gebildet wird, indem ein Schnittstellenmodul, welches in Form eines Sende- und Empfangsgeräts bzw. eines Einschubgehäuses ausgebildet ist, aus einem Kofferteil einer Mobilfunkeinheit entnommen und in einen im Fahrzeug vorgesehenen Einbauschacht eingeschoben wird. An diese Sende- und Empfangseinheit bzw. an das Einschubgehäuse ist eine gerätespezifische Halterung mittels einer Kabelverbindung anschließbar, wobei diese gerätespezifische Halterung bzw. dieser Telefonadapter geeignet ist, das Mobiltelefon temporär aufzunehmen. Das als Einschubgehäuse bzw. Sende- und Empfangseinheit realisierte Schnittstellenmodul kann mit einer Anzeigeeinrichtung in Form eines Anzeigedisplays versehen sein. Bei einer Installation des Mobiltelefons als Bestandteil der Freisprecheinrichtung im Kraftfahrzeug ist das Kofferteil nicht Bestandteil dieser Freisprecheinrichtung.

Der Erfindung liegt die Aufgabe zugrunde, die gattungsgemäße Freisprecheinrichtung so auszubilden, daß der Benutzungskomfort verbessert wird.

Diese Aufgabe wird erfindungsgemäß durch die Merkmale im kennzeichnenden Teil des Patentanspruchs 1 gelöst.

Gemäß Anspruch 1 wird vorgesehen, daß die im Kraftfahrzeug installierte Montageeinrichtung mit einem Sender-Empfänger für drahtlose Audioverbindung zu einem Sender-Empfänger an einem Headset mit Kopfhörer und Mikrofon versehen ist. Damit wird es möglich, den Betrieb im Privatmodus komfortabel und sicher im Kraftfahrzeug durchzuführen.

Die Audioverbindung ist so geschaltet, daß sie eingeschaltet ist, wenn die Freisprecheinrichtung im Privatmodus geschaltet ist, wobei in dieser Schaltstellung automatisch Kopfhörer und Mikrofon des Headset eingeschaltet und vorzugsweise der externe Lautsprecher und das externe Mikrofon der Freisprecheinrichtung ausgeschaltet sind. Bei eingeschaltetem Privatmodus kann die Halterung mit dem darin aufgenommenen Mobiltelefon an und/oder auf der im Kraftfahrzeug installierten Montageeinheit angeordnet verbleiben.

Der im Bereich der Montageeinheit bzw. Halterung angeordnete Sender-Empfänger kann als separate, vorzugsweise nachrüstbare Baueinheit ausgebildet sein.

Die Audioverbindung kann über einen von Hand betätigbaren Schalter und/oder über eine Sprachsteuerung ein-/ausschaltbar sein. Der von Hand betätigbare Schalter kann vorzugsweise im Bereich des Senders-Empfängers der Montageeinheit bzw. der Halterung und/oder im Bereich des Senders-Empfängers des Headsets angeordnet sein.

Es kann vorgesehen sein, daß an die Montageeinheit und/oder die Halterung und/oder an das Schnittstellenmodul eine Rechen- und/oder Speicher- und/oder Anzeigeeinrichtung anschließbar ist. Bei dieser anschließbaren Einrichtung kann es sich vorzugsweise um ein Personal Digital Assistant, einen sogenannten DPA oder Organizer, handeln. Es können damit z.B. darin gespeicherte Daten in die Halterung oder die Montageeinheit bzw. das Mobiltelefon oder in das Schnittstellenmodul eingegeben werden und andererseits auch Daten aus dem Mobiltelefon, insbesondere irgendwelche empfangenen Daten, z.B. SMS oder Mailnachrichten, angezeigt oder vorgelesen werden. Ferner kann über die Kombination mit dem PDA oder Organizer auch ein Internetzugang im Auto hergestellt werden. Außerdem kann über die Recheneinheit des PDA bzw. Organizers auch eine Datenverarbeitung erfolgen, über die darin integrierte Rechenleistung, das Betriebssystem und den Browser.

Außerdem besteht durch die Internetanbindung auch die Möglichkeit, über einen Dienstleister, z.B. Passo, den Weg zu navigieren. Anstelle des PDA oder des Organizers kann auch eine andere Computereinrichtung, z.B. Laptop oder Notebook, angeschlossen werden. Aufgrund der kompakten Bauart der PDA und Organizer ergeben sich jedoch besondere Anordnungsvorteile. Der PDA und Organizer kann vorzugsweise auf einer fahrzeugfesten Konsole montiert werden, z.B. angrenzend an die Montageeinheit. Die Rechen- und/oder Speicher- und/oder Anzeigeeinrichtung kann auch als reine Recheneinrichtung oder als reine Speichereinrichtung oder als reine Anzeigeeinrichtung ausgebildet sein. Auch in diesem Fall ergeben sich wesentliche Benutzervorteile. Es können z.B. über das Mobiltelefon empfangene Daten dann über den Rechner verarbeitet oder über den Speicher gespeichert werden oder irgendwelche in dem Speicher abgelegte Daten in das Mobiltelefon bzw. die Halterung oder das Schnittstellenmodul eingegeben werden. Wesentliche Vorteile ergeben sich auch mit der Ausgestaltung als Anzeigeeinrichtung, z.B. Display oder Bildschirm, um beispielsweise über das Mobiltelefon empfangene Nachrichten anzuzeigen.

Vorteilhaft wird vorgesehen, daß an die Halterung und/oder die Montageeinrichtung und/oder an das Schnittstellenmodul ein kabelloses Fernsteuergerät anschließbar ist. Es kann sich um ein batteriebetriebenes Gerät handeln, vorzugsweise ein kleines Handgerät. Dieses Fernsteuergerät kann vorzugsweise einige wenige Handbetätigungstasten aufweisen, z.B. eine Notruftaste, eine Push to talk-Taste, um den Spracherkenner der Freisprecheinrichtung ein-/auszuschalten, und weitere Tasten, um weitere Funktionen der Freisprecheinrichtung zu steuern oder zumindest ein-/auszuschalten. Das Fernsteuergerät kann ferner zur Ansteuerung weiterer Funktionen im Kraftfahrzeug vorgesehen sein und entsprechende Betätigungstasten aufweisen. Die Tasten können auch als Multifunktionstasten ausgebildet sein. Es ist möglich, vorzusehen, daß sämtliche Funktionen, wie sie mit Funktionslenkrädern ansteuerbar sind, über dieses separate Fernsteuergerät ansteuerbar sind. Es können so z.B. Fahrzeugfunktionen, wie elektrische Fensterheber, Sitzverstellung usw., ansteuerbar sein, aber auch beliebige Multimediaanwendungen, die in dem Kraftfahrzeug möglich sind. Neben der Freisprecheinrichtung können also Fahrzeugfunktionen und/oder Einrichtungen, wie Autoradio, Fernseher, Navigationssystem, Internetzugang oder Kommunikationssysteme, wie Telematic mit bevorzugten Ausführungen der Fernsteuergeräte gesteuert werden.

Bei bevorzugten Ausführungen weist sowohl die Montageeinheit bzw. die das Mobiltelefon aufnehmende Halterung als auch das Schnittstellenmodul jeweils einen Mikroprozessor auf, die über einen Bus miteinander kommunizieren. Bei diesen Ausführungen kann eine automatisch optimierende Schnittstellenkonfiguration, eine Berechtigungsprüfung und eine Datenverschlüsselung und/oder Datenkomprimierung erfolgen. Besondere Vorteile ergeben sich, wenn eine automatische Schnittstellenkonfiguration mit einer Berechtigungsprüfung und mit einer Datenverschlüsselung verknüpft werden. Es sind dabei Ausführungen möglich, die einerseits für den Benutzer komfortabel in der Bedienung sind, andererseits aber auch manipulationssicher sind und auch für Mobiltelefone der künftigen UMTS-Generation problemlos verwendbar sind.

Falls im Kraftfahrzeug schon ein Steuergerät installiert sein sollte, etwa für das Autoradio, für einen Fernseher, für ein Navigationsgerät oder für ein Kommunikationssystem wie z.B. Telematic oder als Internetzugang, kann die mittels einer Kabelverbindung oder einer direkten Steckverbindung an die Telefonhalterung angeschlossene Montageeinheit statt an ein eigenes Schnittstellenmodul der Freisprecheinrichtung auch unmittelbar an jenes Steuergerät angeschlossen werden.

Grundsätzlich kann die Kabelverbindung für den Bus zwischen Schnittstellenmodul und Montageeinheit für die Telefonhalterung durch eine Fernsteuerung, vorzugsweise mit batteriebetriebenem Handfernsteuergerät, ersetzt werden, die noch für andere Funktionen als für den Betrieb der Freisprecheinrichtung einsetzbar ist, nämlich insbesondere für solche Funktionen, die bei modernen Fahrzeugen von einem Multifunktionslenkrad aus aktivierbar sind.

Bei besonders bevorzugten Ausführungen kann das Schnittstellenmodul mit einer Spracherkennung zu immanueller Sprachsteuerung ausgestattet sein.

Bei den Ausführungen mit Sprachsteuerung und bei den Ausführungen mit kabellosem Fernsteuergerät kann der Spracherkenner bzw. das Fernsteuergerät an das eigene Schnittstellenmodul der Freisprecheinrichtung oder aber auch an ein Schnittstellenmodul oder Steuergerät einer im Kraftfahrzeug vorhandenen weiteren Einrichtung, wie Autoradio, Fernseher, Navigationssystem, Internetzugang oder Kommunikationssystem, wie z.B. Telematic angeschlossen werden. Auf ein eigenes Schnittstellenmodul für die Freisprecheinrichtung kann verzichtet werden, wenn ein entsprechendes Modul bzw. Steuergerät vorhanden ist.

Schließlich ist eine durch die materielle oder kabellos immaterielle Busverbindung zwischen Schnittstellenmodul und Montageeinheit für die Halterung nun eröffnete Anschlußmöglichkeit mehrerer auch für gänzlich unterschiedliche Leistungsklassen ausgelegter Halterungen an ein gemeinsames, vorzugsweise einziges Schnittstellenmodul im Fahrzeug vor allem für Geschäftsfahrzeuge von gesteigertem praktischem Interesse.

Der Einsatz ist in allen Kraftfahrzeugen, d.h. Personen- und Nutzfahrzeugen aller Art vorgesehen. Auch der Einsatz in Schienenfahrzeugen ist vorgesehen. Es handelt sich in der Regel um Einsatz in Landfahrzeugen, aber auch der Einsatz in z.B.Sportbooten und Sportflugzeugen ist entsprechend möglich.

Bezüglich Einzelheiten der erfindungsgemäßen Lösungen und deren Weiterbildungen wird außer auf die Ansprüche, die alle inhaltlich auch in wechselseitiger Abhängigkeit voneinander stehen können, auch auf nachstehende Beschreibung verwiesen, die anhand eines in der Zeichnung auf das Wesentliche vereinfacht skizzierten bevorzugten Realisierungsbeispieles zur Erfindung auf deren Grundfunktionen und Weiterbildungsmöglichkeiten näher eingeht.

Dabei zeigt:

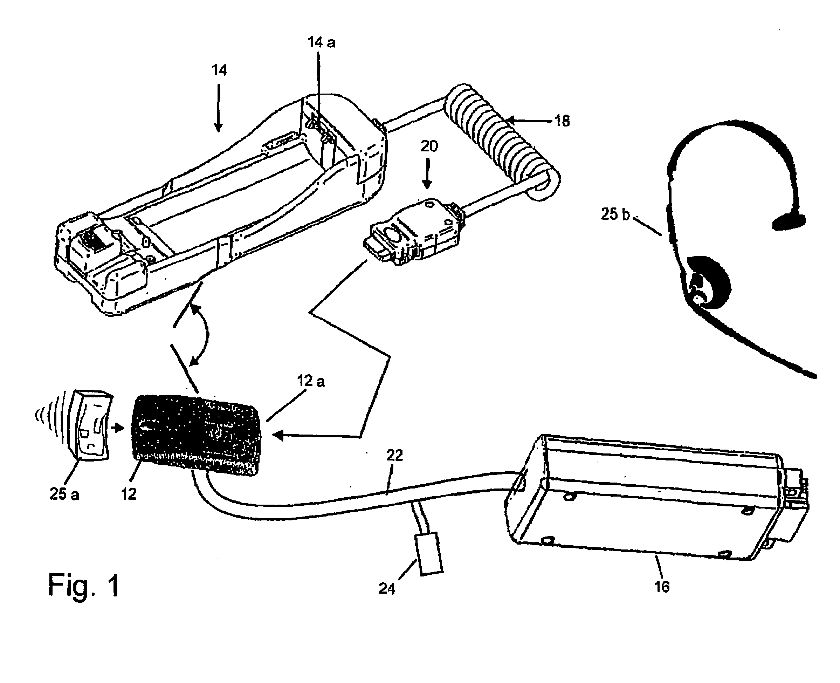

- Fig. 1: eine Explosionsdarstellung eines Ausführungsbeispiels einer Freisprecheinrichtung.

Bei dem dargestellten Ausführungsbeispiel handelt es sich um eine hinsichtlich unterschiedlichster Typen und Leistungsklassen von marktgängigen Mobiltelefonen universell verwendbare Kraftfahrzeug-Freisprecheinrichtung, kurz Universal-Freisprecheinrichtung genannt. Eine Besonderheit in dem dargestellten vorliegenden Fall ist, daß für den Privatmodus ein über eine drahtlose Audioverbindung anschließbares Headset 25b vorgesehen ist. In der Figur nicht dargestellt ist ein bei dem Ausführungsbeispiel ebenfalls anschließbarer Pesonal Digital Assistent (PDA) und ein batteriebetriebenes Fernsteuergerät.

Ein fahrzeugfest zu installierendes, universelles Schnittstellenmodul 16 ist unabhängig von den verschiedenen Mobiltelefonen (nicht gezeichnet) ausgelegt. Das kommuniziert im Datenverkehr oder mit Pegelsteuerung aber geräteunabhängig über einen materiellen oder immateriellen Bus 22 und über eine ebenfalls fest im Fahrzeug montierte Montageeinheit 12 für eine gerätespezifisch ausgebildete, leicht austauschbar darauf zu befestigende Halterung 14. Diese Kommunikation erfolgt zwischen je einem Mikroprozessor beiderseits der Busverbindung, nämlich ein Mikroprozessor einerseits im Schnittstellenmodul 16 und ein Mikroprozessor andererseits in der Halterung 14 oder in der Montageeinheit 12, über nur noch eine einzige serielle Schnittstelle, die physikalisch synchron und asynchron betrieben werden kann. Eine Halterung 14 kann über ihre Montageeinheit 12 wahlfrei mit unterschiedlichen Schnittstellenmodulen 16 und ein Schnittstellenmodul 16 kann mit beliebigen Halterungen 14 zusammenarbeiten, wofür vor Einsetzen des Datenaustausches wechselseitig eine geräteunabhängige Schnittstellenanpassung erfolgt. Das bedeutet, daß keine feste gerätetechnische Zuordnung zwischen Halterung 14 und Montageeinheiten 12 bzw. Schnittstellenmodulen 16 eingehalten werden muß, sondern der Nutzer zu seinem Mobiltelefon die Halterung 14 freizügig an die z.B. in einem Mietwagen vorzufindende Montageeinheit 12 anschließen kann.

Die mit einem Prozessor ausgestattete, gerätespezifische Halterung 14 wirkt ihrerseits nur als Steuereinheit für die gerätespezifischen Funktionen des gerade zu betreibenden Mobiltelefones, wie insbesondere Schnittstellenübergabe und Akku-Ladezyklus. Dafür ist an der im wesentlichen muldenförmigen Halterung 14 - in der Praxis Cradle genannt - ein Stecker 14a so positioniert, daß der mit den entsprechenden Anschlußstellen des spezifischen, in die Halterung 14 gerade eingesetzten Mobiltelefones zusammenwirkt. Die elektrische, insbesondere datentechnische Verbindung zwischen Halterung 14 und Montageeinheit 12 erfolgt über eine Anschlußeinheit, bei der es sich um ein Systemkabel 18 handeln kann, dessen Stecker 20 an die zugeordnete Buchse 12a in der Montageeinheit 12 gesteckt wird; oder aber statt dieser Kabel-Steckverbindung ist eine korrespondierende Steckverbindung 12b unmittelbar zwischen Montageeinheit 12 und Halterung 14 vorgesehen, die beim Aufsetzen der Halterung 14 auf die Montageeinheit 12 wirksam wird. Die in den Prozessor der Halterung 14 abgelegten gerätespezifischen Daten beziehen sich in erster Linie auf die Leistungsklasse der Mobiltelefone, weniger auf herstellerspezifische Daten, so daß eine Halterung 14 im wesentlichen nur bei Übergang auf eine andere Leistungsklasse ausgetauscht werden muß, noch nicht unbedingt beim bloßen Austausch von Mobiltelefonen (wenn nur deren Anschlüsse weiterhin zum eingebauten Stecker 14a passen).

Für einen Wechsel des Mobiltelefones ist es erforderlich, die Halterung 14 mit ihrer gerätespezifischen Software auszutauschen. Auf eine Identifikation des gerade betriebenen Mobiltelefones kann verzichtet werden, da die Steuereinheiten zwischen Halterung 14 und Schnittstellenmodul 16 seriell, also universal und deshalb geräteunabhängig zusammenwirken. Der Datenaustausch findet hier über den Bus 22 mit einem synchronen Datenkanal statt, bei dem für alle beteiligen Systeme (also insbesondere Halterung14 und Modul 16) identisch alle Zeichen in einem festen Zeitraster bzw. in einem genau aufeinander abgestimmten Takt liegen. Das Taktsignal kann auf einer gesonderten Leitung geführt oder dem Datenstrom aufmoduliert sein. Die Datenblöcke beginnen und enden mit einem Synchronisationszeichen. So können auch die stark ansteigenden Datenmengen beherrscht werden, die mit Einführung des UMTS-Netzes zu erwarten sind, aber mit herkömmlichen asynchronen Schnittstellen, also mit der derzeit anzutreffenden asynchronen Datenübertragung nicht mehr beherrschbar wären. Zusätzliche Datenmengen für die Verarbeitung von Satelliten-Navigationsinformationen, Internet-Zugänge, SMS-Verkehr und dergleichen stellen dann auch kein Problem mehr dar. Im Interesse der gerätetechnischen Flexibilität ist aber eine Umschaltmöglichkeit zwischen synchronem und asynchronem Datenaustausch vorgesehen.

Im Schnittstellenmodul 16 mit seinem Prozessor sind alle fahrzeugspezifischen Funktionen abgebildet und in Zusammenhang damit auch die optionalen Funktionen dieser Universal-Freisprecheinrichtung aktivierbar, wie insbesondere eine aus der Nachrichtentechnik geläufige Echoentzerrung, Rauschunterdrückung, Spracherkennung und -steuerung oder Text - Sprach - Wandlung. Zugleich ist dieser Prozessor als Transceiver zum Datenbus des Fahrzeuges ausgelegt. Schließlich dient er der Freisprecheinrichtung als Audioverstärker. Ein Schnittstellenmodul 16 kann für wenigstens eine Typenklasse unterschiedlicher Fahrzeuge ausgelegt sein, um zu größeren Fertigungslosen zu gelangen.

Wenn das Mobiltelefon in seiner Halterung 14 eingerastet und dadurch mit dem Stecker 14a verbunden ist, dann wird vom Schnittstellenmodul 16 die Freisprechfunktion aktiviert und in Bereitschaftsstellung geschaltet für den Fall, daß ein Telefongespräch geführt wird. D.h. im Falle eines Telefonats wird dann insbesondere das externe Mikrofon und der externe Lautsprecher (beide in der Zeichnung nicht dargestellt und beispielsweise schon im Autoradio vorhanden) eingeschaltet und das Mute-Signal schaltet das Autoradio stumm. Wenn die Version reaslisiert ist, bei welcher die Schale 14 über das Systemkabel 18 mit Stecker 20 an die Montageeinheit 12 angeschlossen ist, wird mit abnehmender Halterung 14 (mit eingelegtem Mobiltelefon ) von der Montageeinheit 12 die oben genannte Bereitschaftsstellung von Freisprechen auf einen Privatmodus umgeschaltet und im Falle, daß das Telefongespräch geführt wird, der externe Lautsprecher und das externe Mikrofon abgeschaltet und das Radio über Mute-Signal stumm geschaltet.

Um auch für diesen Betrieb im Privatmodus keine - im betriebsbereiten Kraftfahrzeug ohnehin unterdessen verbotenen - manuellen Handhabungen wie Abnehmen des Mobiltelefones aus seiner Halterung 14 ausführen zu müssen, ist die Montageeinheit 12 zweckmäßigerweise mit einer Steckfassung für einen kleinen Sender-Empfänger 25a ausgestattet, der etwa in Blue-Tooth-Technik eine mehrkanalige drahtlose Signalübertragung über Funk- oder Infrarotstrecken an einen entsprechenden Sender-Empfänger eines Headset 25b mit Kopfhörer und Mikrofon übermittelt.

Anstelle oder zusätzlich zu dem bei der Anordnung in Fig. 1 vorhandenen als Audiomodul ausgebildeten Sender-Empfänger 25a kann ein Personal Digital Assistant, ein sogenannter PDA oder Mini-PC, über Kabel oder kabellos, z.B. über Funk oder Blue Tooth an die Montageeinheit 12 angeschlossen werden.

Vorzugsweise ist diese Anschlußmöglichkeit bei Ausführungen in Fig. 1 vorgesehen, bei denen die Halterung 14 kein Anschlußkabel 18 aufweist, sondern über die elektrische Steckverbindung mit der Montageeinheit 12 verbindbar ist und die Montageeinheit 12 entsprechende Elektronik, vorzugsweise einen Mikroprozessor aufweist. Der in Fig. 1 nicht dargestellte PDA kann mittels einer im Kraftfahrzeug stationären Halterung befestigt werden, vorzugsweise kann die Anordnung in der Nähe der Montageeinheit erfolgen. Mit dem Anschluß des PDA wird es möglich, über das Mobiltelefon empfangene SMS- oder Mailnachrichten am Display des PDA anzuzeigen oder vorzulesen. Außerdem ist es mit dem Anschluß des PDA auch möglich, einen Internetzugang im Kraftfahrzeug herzustellen, wobei der PDA die notwendige Technik bereits mitbringt, d.h. Rechenleistung, Betriebssystem und Browser usw.. Mit der Möglichkeit der Internetanbindung kann auch über einen Dienstleister, z.B. Passo, der Weg navigiert werden. Darüber hinaus ist es möglich, über den PDA die Fernsprecheinrichtung bzw. das Mobiltelefon anzusteuern, indem die Daten in den PDA eingegeben werden oder in den PDA gespeicherte Daten verwendet werden, z.B. kann das Telefonbuch des PDA für die Nummernwahl verwendet werden. Für den Datenverkehr erfolgt eine automatische Abstimmung zwischen der Halterung 14 und dem Schnittstellenmodul 16 aufeinander, völlig unabhängig vom gerade zu betreibenden Mobiltelefon. Vor der Schnittstellenkonfiguration herrscht die asynchrone Grundeinstellung der Busteilnehmer. Nach dem Einschalten bzw. Anstecken der Halterung 14 an den Bus 22 zum Schnittstellenmodul 16 hört die Halterung 14 in der Grundeinstellung den Bus ab. Empfängt die Halterung 14 innerhalb einer vorgegebenen Zeitspanne in der Größenordnung von z.B. drei Sekunden keine Initialisierungskennung, schaltet die Halterung 14 ihre Schnittstelle auf Pegelsteuerung um, weil offenbar kein funktionstüchtiges Schnittstellenmodul 16 oder eines mit Pegelsteuerung statt mit Prozessor-Ablaufsteuerung angeschlossen ist; d.h., es werden dann keine Datentelegramme gesendet, sondern die Schnittstellensteuerung erfolgt über analoge Signale und somit in einer Betriebsart, in der immerhin noch bestimmte Komfort-Grundfunktionen wie Stummschaltung des Autoradios bei Funkkommunikation und deren Lautstärkeregelung funktionieren. Beim Verbindungsaufbau findet also zur Beschleunigung der Initialisierung keine zusätzliche Belastung durch etwaigen Austausch systemspezifischer Daten des gerade eingesetzten Mobiltelefones statt. Der aktuelle Datenaustausch bezieht sich immer nur auf Daten, die typisch für die Halterung 14 und das Schnittstellenmodul 16 mit ihren integrierten Prozessoren sind, er enthält keine hinsichtlich des Mobiltelefons gerätetypischen Daten.

Das Modul 16 sendet zunächst zyklisch eine Initialisierungskennung für den Kommunikationsaufbau, bis bei Anschluß einer Halterung 14 über den Bus 22 eine Initialisierungsantwort von der Halterung 14 kommt. Damit kann die Schnittstellenkonfiguration über Datenaustausch stattfinden, nämlich auf optimale Geschwindigkeit und Datensicherheit zwischen Datenbus-Teilnehmern verschiedener Ausbaustufen.

Ist auf diese Weise der Verbindungsaufbau erfolgreich, sendet der Schnittstellenmodul 16 seine Schnittstellenparameter an die Halterung 14, die eine bestmögliche Schnittstellenverbindung aus Sicht des Schnittstellenmoduls16 darstellen. Das bedeutet, daß die Halterung 14 die Parameter des Schnittstellenmoduls 16 zurücksendet, wenn sie von der Halterung 14 unterstützt werden und wenn sie besser sind, als die Parameter der Halterung 14; andernfalls sendet sie ihre eigenen Parameter zurück (Maximalanforderung des Schnittstellenmoduls 16). Sollte das Schnittstellenmodul 16 die über den Bus 22 empfangenen Schnittstellenparameter nicht unterstützen können, sendet es neue Parameter an die Halterung 14, die höchstens dieselben Anforderungen haben, wie die gerade von der Halterung 14 empfangenen Parameter. Nach einer vorgegeben Anzahl von beispielsweise drei ergebnislosen Parametervorschlägen bleibt es jedoch bei der oben erwähnten Grundeinstellung.

Die Schnittstellenkonfiguration wird ausgelöst, wenn das Schnittstellenmodul 16 ein Umschaltkommando zurücksendet, weil es den aktuell empfangenen Satz von Schnittstellenparametern unterstützen kann. Damit schalten Halterung 14 und Schnittstellenmodul 16 auf die neue Konfiguration um. Mit dieser werden dann zum Testen noch einmal die aktuell gültigen Parameter ausgetauscht. Nun kann die digitale Kommunikation zwischen Halterung 14 und Schnittstellenmodul 16 über den Bus 22 stattfinden.

Um die Nutzkommunikation zwischen Halterung 14 und Schnittstellenmodul 16 automatisch autorisieren zu können, ist eine Berechtigungsprüfung zweckmäßig, am mögliche Betriebsstörungen aufgrund von Unverträglichkeiten weitestgehend ausschließen zu können. Die Berechtigungsprüfung bezieht sich also weniger auf den Nutzer als vielmehr vor allem darauf, daß u.U. Komponenten bestimmter Auslegung nur in bestimmten Fahrzeugtypen betrieben werden dürfen. Sie folgt zweckmäßigerweise unmittelbar auf die zuvor beschriebene, erfolgreich abgeschlossene Schnittstellenkonfiguration. Nur wenn die für verschiedene Fahrzeughersteller oder Betreiber vom Lieferanten der Freisprechanlage zum jeweiligen Fahrzeugtyp vergebenen Kennungen in Form von Codenummern hinsichtlich Halterung14 und / oder Schnittstellenmodul 16 paarweise einander zugeordnet sind, kann der Datenverkehr aufgenommen werden, also die Kommunikation über diese Freisprechanlage stattfinden.

Dabei ist eine Datenkompression auf dem Bus 22 von der Montageeinheit 12 (also letztlich von der Telefon-Halterung 14) zum Schnittstellenmodul 16 zweckmäßig, um hier die erforderliche Übertragungsbandbreite und dementsprechend den Aufwand für Entstörungsmaßnahmen gering halten zu können. Für das Komprimieren wird aus Aufwandsgründen auf eines der eingeführten Slandardverfahren zurückgegriffen.

Eine zusätzliche Verschlüsselung des Datenverkehrs ist ein wirksames Mittel gegen etwaige unautorisierte Eingriffe in die Schnittstellenkonfiguration. Für das Chiffrieren genügt es im vorliegenden Zusammenhang, auf die Übertragung von Zeichen im Klartext zu verzichten, indem eines der bekannten, schnellen Verschlüsselungsverfahren auf unterster Ebene unter Vermeiden einer Wiederholung gleicher Zeichenmuster verwirklicht wird. Vorzugsweise wird das erste Zeichens eines Datentelegrammes, bei dem es sich um das auch empfängerseitig bekannte Synchronisationszeichen handelt, einer Quasi-Zufallsbehandlung nach bestimmter Gesetzmäßigkeit unterworfen. Empfangsseitig wird dann das erste empfangene Zeichen in das bekannte Synchronisationszeichen rückgewandelt und die daraufhin erscheinende Datenfolge ebenfalls gemäß der dafür sich ergebenden Gesetzmäßigkeit behandelt. Der Sender chiffriert also alle Zeichen eines Telegramms nach dem gleichen für das Synchronisationszeichen vorgegebenen Muster (hinsichtlich Verschiebung und Verknüpfung seiner Bits). Der Empfänger führt das erste empfangene Zeichen auf die Bitfolge des bekannten Synchronisationszeichens zurück und wendet dann des Prozedur (hinsichtlich Verschiebung und Verknüpfung der Bits eines Zeichens) auch auf die folgenden Zeichen des Telegramms an. Durch fortlaufenden Wechsel der Kodierung haben die Telegramme selbst solcher Daten, die betriebsbedingt oder zur Redundanzerhöhung mehrfach übertragen werden, auf der Schnittstelle stets unterschiedliches Aussehen.

Da das Schnittstellenmodul 16 vorzugsweise für Einsatzmöglichkeit in unterschiedlichen Fahrzeugen ausgelegt wird, ist es zweckmäßig, darin Zusatzfunktionen zu verwirklichen, die nur bedarfsweise aktiviert werden. Eine solche Zusatzfunktion ist die Sprachsteuerung der Halterung 14 und damit des Mobiltelefons, die aber auch zur Steuerung von Fahrzeugfunktionen herangezogen werden kann. Das ist insbesondere problemlos realisierbar bei Funktionen, die ohnehin mit dem Schnittstellenmodul 16 funktional verbunden sind, wie das Autoradio, dessen Lautsprecher für die Freisprecheinrichtung genutzt wird. Dann kann aber der zu erkennende Sprachschatz auch gleich für die Akustiksteuerung etwa von am Kfz-Universalbus hängenden Komfortfunktionen wie Sitzverstellung, Fensterheber, Navigationsanzeige u.dgl. mit eingegeben werden, apparativer Mehraufwand entsteht dadurch nicht mehr.

Im Rahmen vorliegender Erfindung kann sogar auf den Einbau eines eigenständigen Schnittstellenmoduls (16) verzichtet werden, wenn dessen Funktion schon anderweitig im Kraftfahrzeug implementiert ist, wie beispielsweise in der Funktion einer Telematik-Box als Universal-Steuergerät etwa für Autoradio, Fernseher, Internetzugang und Navigationssystem, die dann auch für vorliegende Freisprecheinrichtung mitbenutzt werden kann.

Besonders zweckmäßig ist der Anschluß des Halters 14 gemäß vorliegender Erfindung an einen Kommunikationsport eines Autoradios mit universeller Eingabetastatur und Display. Denn dann kann der Halter samt seinem Mobiltelefon beispielsweise ins Handschuhfach eingeschlossen werden, weil nunzusätzlich zum Lautsprecher und Mikrofon - für Bedienungs- und Anzeigefunktionen des Mobiltelefons das Autoradio herangezogen wird. Der Anschluß der Halterung an das Rundfunkgerät des Kraftfahrzeuges kann mit minimalem zusätzlichem Verkabelungsaufwand über eine weitere Schnittstelle erfolgen, über den auch telefonspezifische Datensätze wie Adressen und Anschlußnummern, SMS-Telegramme oder Servicedaten aus dem Fahrzeug heraus ebenso wie in es hinein übertragbar sind.

Eine ergonomisch vorteilhafte Anordnung von Bedienelementen an der für leicht demontierbare Aufnahme der Halterung 14 optimierten Montageeinheit 12 ist nicht ohne weiteres möglich. Zum Einschalten der Freisprecheinrichtung bzw. ihres Spracherkenners ist deshalb ein autarkes da batteriebetriebenes und deshalb im Fahrgastraum beliebig, auch bei den Fahrgästen auf den rückwärtigen Sitzen positionierbares kleines Steuergerät mit einigen wenigen Tasten zweckmäßig, unter denen eine Notruftaste sein kann, aber auch Bedienungsmöglichkeiten zur Steuerung von Informationsanzeigen oder etwa von Multimediaanwendungen im Kraftfahrzeug. Insbesondere kann an dem Gerät auch mindestens eine sogenannte "Push to talk" Taste vorhanden sein, über die die Sprachsteuerung der Freisprecheinrichtung und/oder anderer im Fahrzeug installierter Einrichtungen ein-/ausschaltbar sind. Ferner können auch Tasten zur Steuerung von reinem Fahrzeugfunktionen wie Fensterheber, Sitzverstellung usw. an dem Gerät vorgesehen sein. Die Signalübertragung zum Halter des Mobiltelefons, also somit in dessen Steuerung hinein und daraus weiter auf den Kfz-Bus, erfolgt zweckmäßigerweise drahtlos, insbesondere über eine mit gängigen Komponenten preiswert erstellbare Infrarotstrecke. Das eröffnet Möglichkeiten, die sonst nur beschränkt in der obersten Ausstattungsklasse mit Multifunktions-Lenkrad anzutreffen sind.

Weit für die Kommunikation zwischen Schnittstellenmodul 16 und Montageeinheit 12 für die Halterung 14 ein Bus 22 vorgesehen ist, können problemlos mehrere Mobiltelefone mit ihren Haltern 14 an das einzige Schnittstellenmodul 16 eines Fahrzeuges zusätzlich angeschlossen und von hier aus verwaltet werden, was die universelle Verwendbarkeit der erfindungsgemäßen Freisprecheinrichtung eindrucksvoll unterstreicht.

## Patentansprüche

1. Freisprecheinrichtung für den Betrieb von Mobiltelefonen in Kraftfahrzeugen, z.B. Personenkraftwagen, Bus- und Lastkraftwagen und anderen Nutzfahrzeugen, mit jeweils einem im Kraftfahrzeug installierbaren Schnittstellenmodul (16) und einer im Kraftfahrzeug installierbaren Montageeinheit (12) für eine leicht auswechselbare gerätespezifische, ein Mobiltelefon temporär aufnehmende Halterung, wobei an das Schnittstellenmodul (16) eine Anzeigeeinrichtung anschließbar ist, **dadurch gekennzeichnet, daß** die Montageeinheit (12) mit einem Sender-Empfänger (25a) für drahtlose Audioverbindung zu einem Sender-Empfänger an einem Headset (25b) mit Kopfhörer und Mikrofon versehen ist, daß die Audioverbindung so geschaltet ist, daß sie eingeschaltet ist, wenn die Freisprecheinrichtung in Privatmodus geschaltet ist und dabei automatisch Kopfhörer und Mikrofon des Headset (25b) eingeschaltet und vorzugsweise externe Lautsprecher und Mikrofon der Freisprecheinrichtung ausgeschaltet sind, daß das Schnittstellenmodul (16) fahrzeugspezifische Daten vorzugsweise auf einem Mikroprozessor gespeichert enthält und daß die Halterung (14) vorzugsweise auf einem Mikroprozessor gespeicherte Daten enthält.

2. Fernsprecheinrichtung nach Anspruch 1,
**dadurch gekennzeichnet ,**
**daß** an das Schnittstellenmodul (16) ein kabelloses Fernsteuergerät anschließbar ist.

3. Freisprecheinrichtung nach Anspruch 1 oder 2,
**dadurch gekennzeichnet,**
**daß** an die Montageeinheit (12) eine Speichereinrichtung anschließbar ist.

4. Freisprecheinrichtung nach einem der Ansprüche 1 bis 3,
**dadurch gekennzeichnet,**
**daß** an die Montageeinheit (12) eine Anzeigeeinrichtung anschließbar ist.

5. Freisprecheinrichtung nach einem der Anspruch 1 bis 5,
**dadurch gekennzeichnet,**
**daß** der Sender-Empfänger (25a) der Montageeinheit (12) als separate und/oder nachrüstbare Baueinheit ausgebildet ist.

6. Freisprecheinrichtung nach einem der Ansprüche 1 bis 5,
**dadurch gekennzeichnet,**
**daß** die Audioverbindung über einen von Hand betätigbaren Schalter und/oder über eine Sprachsteuerung ein-/ausschaltbar ist.

7. Freisprecheinrichtung nach Anspruch 6,
**dadurch gekennzeichnet,**
**daß** der von Hand betätigbare Schalter im Bereich des Sende-Empfängers der Montageeinheit (12) bzw. der Halterung (14) und/oder im Bereich des Senders-Empfängers des Headsets (25b) angeordnet ist.

8. Freisprecheinrichtung nach einem der Ansprüche 1 bis 7,
**dadurch gekennzeichnet,**
**daß** bei eingeschaltetem Privatmodus die Halterung (14) an und/oder auf der Montageeinheit (12) angeordnet ist.

9. Freisprecheinrichtung nach einem der Ansprüche 1 bis 8,
**dadurch gekennzeichnet,**
**daß** die an die Montageeinheit (12) und/oder die Halterung (14) und/oder an das Schnittstellenmodul (16) anschließbare Rechen- und/oder Speicher- und/oder Anzeigeeinrichtung als Computer mit Display, vorzugsweise Laptop oder Notebook oder insbesondere als Personal Digital Assistant (PDA) oder Organizer oder Microcomputer ausgebildet ist.

10. Freisprecheinrichtung nach Anspruch 9,
**dadurch gekennzeichnet,**
**daß** die Rechen- und/oder Speicher- und/oder Anzeigeeinrichtung über Kabel oder kabellos, z.B. über Funk, Blue Tooth anschließbar ist.

11. Freisprecheinrichtung nach einem der Ansprüche 1 bis 10,
**dadurch gekennzeichnet,**
**daß** einerseits das Schnittstellenmodul (16) und andererseits die Montageeinheit (12) und/oder die Halterung (14) jeweils einen Mikroprozessor aufweisen.

12. Freisprecheinrichtung nach Anspruch 11,
**dadurch gekennzeichnet,**
**daß** die Mikroprozessoren über eine serielle, wahlweise synchron und/oder asynchron betreibbare Schnittstelle über einen Bus (22) miteinander kommunizieren, um zu Betriebsbeginn die Schnittstelle gemäß der aktuellen Gerätekombination zu konfigurieren.

13. Freisprecheinrichtung nach Anspruch 12,
**dadurch gekennzeichnet,**
**daß** eine Schnittstellenkonfiguration ausgelöst wird, wenn das Schnittstellenmodul (16) ein Umschaltkommando an die Montageeinheit (12) zurücksendet, weil es dessen gerade empfangenen Satz von Schnittstellenparametern unterstützen kann.

14. Freisprecheinrichtung nach einem der Ansprüche 11 bis 13,
**dadurch gekennzeichnet,**
**daß** die Mikroprozessoren über eine serielle, wahlweise synchron und/oder asynchron betreibbare Schnittstelle über einen Bus (22) miteinander kommunizieren, um eine Berechtigungsprüfung hinsichtlich der Zulässigkeit des Betriebs eines Mobiltelefons an dem vorliegenden Schnittstellenmodul (16) durchzuführen.

15. Freisprecheinrichtung nach einem der Ansprüche 11 bis 14,
**dadurch gekennzeichnet,**
**daß** die vorzugsweise über einen Bus (22) miteinander kommunizierenden Mikroprozessoren eine Datenverschlüsselung und/oder Datenkompression durchführen.

16. Freisprecheinrichtung nach Anspruch 15,
**dadurch gekennzeichnet,**
**daß** das erste Zeichen eines Datentelegramms ein empfängerseitig bekanntes Synchronisationszeichen ist, daß senderseitig gemäß einer vorgegebenen Gesetzmäßigkeit, vorzugsweise quasizufällig durch Rotation und/oder Verknüpfung einer Bitfolge chiffriert wird, woraufhin die anderen Zeichen des zu sendenden Datentelegramms nach der gleichen Gesetzmäßigkeit chiffriert werden, während empfangsseitig das erste Zeichen entsprechend, vorzugsweise durch Bitrotation und/oder Verknüpfung in das erwartete Synchronisationszeichen rückgewandelt wird, woraufhin auch die anderen Zeichen dieses Telegramms in gleicher Weise behandelt werden.

17. Freisprecheinrichtung nach Anspruch 15,
**dadurch gekennzeichnet,**
**daß** die Gesetzmäßigkeit für aufeinander folgende Datentelegramme geändert wird.

18. Freisprecheinrichtung nach einem der Ansprüche 1 bis 17,
**dadurch gekennzeichnet,**
**daß** die Halterung (14) und/oder Montageeinheit (12) an einem im Kraftfahrzeug ohnehin, z.B. für den Betrieb eines Autoradios, eines Fernsehers, eines Navigationssytems, des Internets oder eines Kommunikationssystems wie z.B. Telematic vorhandenen Steuergerät anschließbar ist.

19. Freisprecheinrichtung nach einem der Ansprüche 1 bis 18,
**dadurch gekennzeichnet,**
**daß** die Halterung (14) und/oder die Montageeinheit (12) an einem im Kraftfahrzeug installierbaren Schnittstellenmodul (16) mit vorzugsweise auf einem Mikroprozessor gespeicherten fahrzeugspezifischen Daten anschließbar ist und an der Halterung (14) und/oder der Montageeinheit (12) und/oder an dem Schnittstellenmodul (16) ein kabelloses Fernsteuergerät anschließbar ist, über das auch derartige andere Funktionen als die Freisprecheinrichtung im Kraftfahrzeug fernsteuerbar sind, wie sie etwa über ein Multifunktionslenkrad ansteuerbar wären, wobei vorzugsweise vorgesehen ist, daß das Schnittstellenmodul (16), an dem die Halterung (14) und/oder die Montageeinheit (12) über das kabellose Fernsteuergerät anschließbar ist, als Schnittstellenmodul, vorzugsweise Steuergerät, eines im Kraftfahrzeug ohnehin z.B. für den Betrieb eines Autoradios, eines Fernsehers, eines Navigationssystems, des Internets oder eines Kommunikationssystems wie z.B. Telematic vorhandenen Schnittstellenmoduls (16) ausgebildet ist.

20. Freisprecheinrichtung nach einem der Ansprüche 1 bis 19,
**dadurch gekennzeichnet,**
**daß** die Halterung (14) oder die Montageeinheit (12) an einem im Kraftfahrzeug installierbarem Schnittstellenmodul (16) mit vorzugsweise auf einem Mikroprozessor gespeicherten fahrzeugspezifischen Daten anschließbar ist, das auch mit einem Spracherkenner zur verbalen Steuerung nicht nur der Freisprecheinrichtung, sondern auch anderer Funktionen im Kraftfahrzeug ausgestattet ist, wobei vorzugsweise vorgesehen ist, daß das mit dem Spracherkenner ausgestattete Schnittstellenmodul als ein im Kraftfahrzeug ohnehin vorhandenes Schnittstellenmodul, vorzugsweise Steuerungseinrichtung, z.B. eines Autoradios, eines Fernsehers, eines Navigationssystems, des Internets oder eines Kommunikationssystems wie z.B. Telematic ausgebildet ist.

21. Freisprecheinrichtung nach einem der Ansprüche 1 bis 20,
**dadurch gekennzeichnet,**
**daß** mehrere jeweils einen Mikroprozessor aufweisende Halterungen (14) und/oder Montageeinrichtungen (12) vorgesehen sind, die an einem Bus (22) zu einem gemeinsamen im Kraftfahrzeug installierbarem, vorzugsweise einem Mikroprozessor aufweisenden Schnittstellenmodul (16) anschließbar sind.

22. Freisprecheinrichtung nach einem der Ansprüche 1 bis 21,
**dadurch gekennzeichnet,**
**daß** zur Verbindung des Mikroprozessors der Halterung (14) bzw. der Montageeinheit (12) mit dem Mikroprozessor des Schnittstellenmoduls (16) ein Bus vorgesehen ist, der vorzugsweise als kabellos immaterieller Bus ausgebildet ist.

23. Freisprecheinrichtung nach einem der Ansprüche 1 bis 22,
**dadurch gekennzeichnet,**
**daß** eine kabellose Steckverbindung (12b) zwischen Halterung (14) und Montageeinheit (12) vorgesehen ist und/oder daß eine Kabelverbindung (18) mit Stecker (29) zwischen Halterung (14) und Montageeinheit (12) vorgesehen ist oder daß keine elektrische Verbindung zwischen Halterung (14) und Montageeinheit (12), sondern eine Kabelverbindung mit Stecker zwischen Halterung (14) und dem Schnittstellenmodul (16) vorgesehen ist.

24. Freisprecheinrichtung nach einem der Ansprüche 1 bis 23,
**dadurch gekennzeichnet,**
**daß** die Montageeinheit (12) und/oder die an die Montageeinheit (12) und/oder die Halterung (14) und/oder die an das Schnittstellenmodul (16) anschließbare Rechen- und/oder Speicher- und/oder Anzeigeeinrichtung eine in dem Kraftfahrzeug stationär anbringbare Konsole (12) oder dergleichen aufweist, wobei die Konsole (12) vorzugsweise am Armaturenbrett oder an der Mittelkonsole oder an der Armlehne oder in oder am Handschuhfach oder in oder an einer Tür, vorzugsweise Innenseite einer Fahrzeugtür, anbringbar ist,

25. Freisprecheinrichtung nach Anspruch 24,
**dadurch gekennzeichnet,**
**daß** die Konsole (12) eine an die Befestigungsstelle am Armaturenbrett, an der Mittelkonsole oder an der Armlehne angepaßte Befestigungsseite aufweist.

26. Freisprecheinrichtung nach Ansprüche 24 oder 25,
**dadurch gekennzeichnet, daß** die zur temporären Aufnahme des Mobiltelefons ausgebildete Halterung (14) mit der Konsole temporär verbindbar ist.

27. Freisprecheinrichtung nach einem der Ansprüche 1 bis 26
**dadurch gekennzeichnet,**
**daß** die Halterung (14) als in der Form vorzugsweise schalenförmig an das Mobiltelefon angepaßte Aufnahme zur temporären Aufnahme des Mobiltelefons ausgebildet ist.

28. Freisprecheinrichtung nach einem der Ansprüche 1 bis 27
**dadurch gekennzeichnet,**
**daß** die Halterung (14) einen elektrischen Anschluß für das Mobiltelefon und vorzugsweise eine Steuereinheit, insbesondere mit Mikroprozessor aufweist.

29. Kraftfahrzeug mit einer darin installierten Freisprecheinrichtung nach einem der Ansprüche 1 bis 28.

## Claims

1. Hands-free device for operating mobile telephones in motor vehicles, e.g. private cars, buses and lorries and other service vehicles, having respectively an interface module (16) installable in the vehicle, and a mounting unit (12) installable in the vehicle for an easily replaceable device-specific holder temporarily receiving a mobile telephone, wherein a display device can be connected to the interface module (16), **characterized in that** the mounting unit (12) is provided with a transmitter-receiver (25a) for a wireless audio link with a transmitter-receiver on a headset (25b) having an earphone and microphone, that the audio link is connected up in such a way that it is switched on when the hands-free device is switched into private mode, and at the same time the earphone and microphone of the headset (25b) are automatically switched on and preferably external loudspeakers and microphone of the hands-free device are switched off, that the interface module (16) contains vehicle-specific data preferably stored on a microprocessor and that the holder (14) preferably contains data stored on a microprocessor.

2. Telephone device according to claim 1,
**characterized in that**
a wireless remote control unit can be connected to the interface module (16).

3. Hands-free device according to claim 1 or 2,
**characterized in that**
a memory device can be connected to the mounting unit (12).

4. Hands-free device according to one of claims 1 to 3,
**characterized in that**
a display device can be connected to it the mounting unit (12).

5. Hands-free device according to one of claims 1 to 4,
**characterized in that**
the transmitter-receiver (25a) of the mounting unit (12) is configured as a separate and/or retro-fittable module.

6. Hands-free device according to one of claims 1 to 5,
**characterized in that**
the audio link can be switched on or off using a manually activatable switch and/or using a voice control unit.

7. Hands-free device according to claim 6,
**characterized in that**
the manually activatable switch is arranged in the vicinity of the transmitter-receiver of the mounting unit (12) or the holder (14) and/or in the vicinity of the transmitter-receiver of the headset (25b).

8. Hands-free device according to one of the claims 1 to 7,
**characterized in that**
while the private mode is switched on, the holder (14) is arranged next to and/or on the mounting unit (12).

9. Hands-free device according to one of claims 1 to 8,
**characterized in that**
the computing and/or storage and/or display device that can be connected to the mounting unit (12) and/or to the holder (14) and/or to the interface module (16) is constructed as a computer with a display, preferably a laptop or notebook or, in particular, as a personal digital assistant (PDA) or organiser or microcomputer.

10. Hands-free device according to claim 9, **characterized in that**
the computing and/or storage and/or display device can be connected via cable or without a cable, e.g. using radio, Blue Tooth.

11. Hands-free device according to one of claims 1 to 10,
**characterized in that**
one the one hand the interface module (16) and on the other hand the mounting unit (12) and/or the holder (14) each comprise a microprocessor.

12. Hands-free device according to claim 11,
**characterized in that**
the microprocessors communicate with each other over a serial interface, operable either synchronously and/or asynchronously using a bus (22), in order to configure the interface according to the current combination of devices when operation commences.

13. Hands-free device according to claim 12,
**characterized in that**
an interface configuration is initiated whenever the interface module (16) transmits a switchover command back to the mounting unit (12), because it can support the set of interface parameters just received from the latter.

14. Hands-free device according to one of claims 11 to 13,
**characterized in that**
the microprocessors communicate with one another over a serial interface, operable either synchronously and/or asynchronously using a bus (22), in order to perform an authorisation check with regard to the admissibility of operating a mobile telephone on the present interface module (16).

15. Hands-free device according to one of claims 11 to 14,
**characterized in that**
the microprocessors preferably communicating with one another over a bus (22) perform a data encoding and/or a data compression.

16. Hands-free device according to claim 15,
**characterized in that**
the first character of a data telegram is a synchronisation character known at the receiver side, which is encrypted at the transmitter side according to a prescribed rule system, preferably pseudo-randomly by rotation and/or bitwise operations of a bit sequence, whereupon the other characters of the data telegram to be transmitted are encrypted according to the same rule system, while at the receiver side the first character is correspondingly converted back, preferably by rotation and/or bitwise operations, into the expected synchronisation character, whereupon the other characters of this telegram are also processed in the same way.

17. Hands-free device according to claim 15,
**characterized in that**
the rule system is changed for successive data telegrams.

18. Hands-free device according to one of claims 1 to 17,
**characterized in that**
the holder (14) and/or mounting unit (12) can be connected to a control device present in the vehicle anyway, e.g. for operating a car radio, a television, a navigation system, the internet or a communications system such as Telematic.

19. Hands-free device according to one of claims 1 to 18,
**characterized in that**
the holder (14) and/or the mounting unit (12) can be connected to an interface module (16) that can be installed in the vehicle, preferably having vehicle-specific data stored on a microprocessor, and the holder (14) and/or the mounting unit (12) and/or the interface module (16) can have a wireless remote control device connected to it, by means of which functions in the vehicle other than the hands-free device, of the kind as would be controllable for example using a multi-function steering wheel, can be remotely controlled, wherein it is preferably provided that the interface module (16), to which the holder (14) and/or the mounting unit (12) can be connected via the wireless remote control device, is constructed as an interface module, preferably a control device, of an interface module (16) present in the vehicle anyway, e.g. for operating a car radio, a television, a navigation system, the internet or a communications system such as Telematic.

20. Hands-free device according to one of claims 1 to 19,
**characterized in that**
the holder (14) or the mounting unit (12) can be connected to an interface module (16) installable in the vehicle having vehicle-specific data preferably stored on a microprocessor, which is also equipped with a speech recogniser for verbal control not only of the hands-free device but also of other functions in the vehicle, wherein it is preferably provided that the interface module equipped with the speech recogniser is constructed as an interface module present in the vehicle anyway, preferably a control device, e.g. of a car radio, a television, a navigation system, the internet or a communications system such as e.g. Telematic.

21. Hands-free device according to one of claims 1 to 20,
**characterized in that**
multiple holders (14) and/or mounting units (12) each having a microprocessor are provided, which can be connected via a bus (22) to a common interface module (16) that can be installed in the vehicle, preferably comprising a microprocessor.

22. Hands-free device according to one of claims 1 to 21,
**characterized in that**
for connecting the microprocessor of the holder (14) or the mounting unit (12) to the microprocessor of the interface module (16) a bus is provided, which is preferably constructed as a virtual wireless bus.

23. Hands-free device according to one of claims 1 to 22,
**characterized in that**
a wireless plug-and-socket connector (12b) is provided between the holder (14) and mounting unit (12), and/or that a cable connection (18) with a plug (29) is provided between the holder (14) and mounting unit (12), or that no electrical connection is provided between the holder (14) and mounting unit (12) but a cable connection with plug is provided between the holder (14) and the interface module (16).

24. Hands-free device according to one of claims 1 to 23,
**characterized in that**
the mounting unit (12) and/or the computing and/or storage and/or display device that can be connected to the mounting unit (12) and/or the holder (14) and/or to the interface module (16) comprises a console (12) or the like, statically mountable in the vehicle, the console (12) preferably being mountable on the instrument panel or on the central console or on the armrest, or in or on the glove compartment, or in or on a door, preferably on the inside of a door of the vehicle.

25. Hands-free device according to claim 24,
**characterized in that**
the console (12) has an attachment face adapted to the attachment point on the instrument panel, on the central console or on the armrest.

26. Hands-free device according to claims 24 or 25,
**characterized in that**
the holder (14) constructed for temporarily receiving the mobile telephone can be temporarily connected to the console.

27. Hands-free device according to one of claims 1 to 26,
**characterized in that**
the holder (14) is constructed in the form of a preferably shell-shaped receptacle adapted to the mobile telephone for temporarily receiving the mobile telephone.

28. Hands-free device according to one of claims 1 to 27,
**characterized in that**
the holder (14) comprises an electrical connection for the mobile telephone and preferably also a control unit, in particular having a microprocessor.

29. Motor vehicle having a hands-free device according to one of claims 1 to 28 installed in it.

## Revendications

1. Installation mains libres pour le fonctionnement de téléphones mobiles dans des véhicules automobiles, par exemple dans des voitures particulières, des bus et des camions et également dans d'autres véhicules utilitaires, avec chaque fois un module d'interface (16) installable dans le véhicule automobile et une unité de montage (12) installable dans le véhicule automobile, pour une fixation facilement interchangeable spécifique à l'appareil, pour le logement temporaire d'un téléphone mobile, un dispositif d'affichage pouvant se raccorder sur le module d'interface (16), **caractérisée en ce que** l'unité de montage (12) est munie d'un émetteur-récepteur (25a) pour la liaison audio sans fil vers un émetteur-récepteur sur une unité de casque (25b) avec écouteur et microphone, **en ce que** la liaison audio est commutée de sorte à être connectée, lorsque l'installation mains libres est commutée en mode privé et à cet effet, l'écouteur et le microphone de l'unité de casque (25b) sont automatiquement connectés et de préférence des haut-parleurs externes et le microphone de l'installation mains libres sont déconnectés, **en ce que** le module d'interface (16) contient des données spécifiques au véhicule, de préférence mémorisées sur un microprocesseur et **en ce que** la fixation (14) contient des données mémorisées de préférence sur un microprocesseur.

2. Procédé selon la revendication 1,
**caractérisé en ce que**,
une télécommande sans fil est susceptible d'être raccordée sur le module d'interface (16).

3. Installation mains libres selon la revendication 1 ou 2,
**caractérisée en ce que**,
un dispositif de mémoire est susceptible d'être raccordé sur l'unité de montage (12).

4. Installation mains libres selon l'une quelconque des revendications 1 à 3,
**caractérisée en ce que**,
un dispositif d'affichage est susceptible d'être raccordé sur l'unité de montage (12).

5. Installation mains libres selon l'une quelconque des revendications 1 à 4,
**caractérisée en ce que**
l'émetteur-récepteur (25a) de l'unité de montage (12) est conçu sous la forme d'un ensemble séparé et/ou complémentaire d'équipement.

6. Installation mains libres selon l'une quelconque des revendications 1 à 5,
**caractérisée en ce que**,
la liaison audio est susceptible d'être connectée/déconnectée via un interrupteur manuel et/ou via une commande vocale.

7. Installation mains libres selon la revendication 6,
**caractérisée en ce que**,
l'interrupteur manuel est disposé dans la zone de l'émetteur-récepteur de l'unité de montage (12) ou de la fixation (14) et/ou dans la zone de l'émetteur-récepteur de l'unité de casque (25b).

8. Installation mains libres selon l'une quelconque des revendications 1 à 7,
**caractérisée en ce que**,
lorsque le mode privé est commuté, la fixation (14) est disposée sur/ou sur le dessus de l'unité de montage (12) .

9. Installation mains libres selon l'une quelconque des revendications 1 à 8,
**caractérisée en ce que**,
le dispositif calculateur et/ou de mémoire et/ou d'affichage susceptible de se raccorder sur l'unité de montage (12) et/ou sur la fixation (14) et/ou sur le module d'interface (16) est conçu sous la forme d'un ordinateur avec écran, de préférence d'un ordinateur portable ou d'un bloc-notes ou notamment en tant qu'assistant numérique personnel (PDA) ou organisateur ou micro-ordinateur.

10. Installation mains libres selon la revendication 9,
**caractérisée en ce que**,
le dispositif calculateur et/ou de mémoire et/ou d'affichage est susceptible de se raccorder par fil, ou sans fil, par exemple par radio, Blue Tooth.

11. Installation mains libres selon l'une quelconque des revendications 1 à 10,
**caractérisée en ce que**,
que d'une part le module d'interface (16) et d'autre part l'unité de montage (12) et/ou la fixation (14) comportent chacun un microprocesseur.

12. Installation mains libres selon la revendication 11,
**caractérisée en ce que**,
les microprocesseurs communiquent entre eux via une interface série, fonctionnant au choix de façon synchrone et/ou asynchrone, via un bus (22) pour configurer l'interface en début de fonctionnement selon l'association actuelle d'appareils.

13. Installation mains libres selon la revendication 12,
**caractérisée en ce que**,
une configuration d'interface est lancée lorsque le module d'interface (16) renvoie à l'unité de montage (12) un ordre de commutation, car il est susceptible de supporter le jeu de paramètres d'interface qu'il vient de réceptionner.

14. Installation mains libres selon l'une quelconque des revendications 11 à 13,
**caractérisée en ce que**,
les microprocesseurs communiquent entre eux via une interface série, fonctionnant au choix de façon synchrone et/ou asynchrone, via un bus (22) pour procéder à un contrôle de correction en ce qui concerne le caractère autorisé du fonctionnement d'un téléphone mobile sur le module d'interface (16) présent.

15. Installation mains libres selon l'une quelconque des revendications 11 à 14,
**caractérisée en ce que**,
les microprocesseurs communiquant entre eux de préférence via un bus (22) procèdent à un cryptage de données et/ou à une compression de données.

16. Installation mains libres selon la revendication 15,
**caractérisée en ce que**,
le premier caractère d'un télégramme de données est un caractère de synchronisation connu côté récepteur, qui côté émetteur est chiffré selon une conformité à une loi prédéfinie, de préférence quasi aléatoire par rotation et/ou enchaînement d'un débit binaire, suite à quoi les autres caractères du télégramme de données qui doit être envoyé sont chiffrés selon la même conformité à une loi, alors que côté récepteur, le premier caractère est retransformé en conséquence, de préférence par rotation binaire et/ou par enchaînement dans le caractère de synchronisation attendu, suite à quoi, les autres caractères dudit télégramme sont traités de la même façon.

17. Installation mains libres selon la revendication 15,
**caractérisée en ce que**,
la conformité à une loi est modifiée pour des télégrammes de données successifs.

18. Installation mains libres selon l'une quelconque des revendications 1 à 17,
**caractérisée en ce que**,
la fixation (14) et/ou l'unité de montage (12) est susceptible d'être raccordée sur un appareil de commande qui est d'ores et déjà présent dans le véhicule automobile, par exemple pour le fonctionnement d'un autoradio, d'un téléviseur, d'un système de navigation, d'Internet ou d'un système de communication, comme par exemple Telematic.

19. Installation mains libres selon l'une quelconque des revendications 1 à 18, **caractérisée en ce que**,
la fixation (14) et/ou l'unité de montage (12) est susceptible de se raccorder sur un module d'interface (16) installable dans le véhicule automobile, avec de préférence des données spécifiques au véhicule mémorisées sur un microprocesseur et **en ce qu'**une télécommande sans fil, via laquelle également d'autres fonctions que l'installation mains-libres, telles qu'elles seraient activables par exemple par un volant multifonction peuvent être télécommandées dans le véhicule est susceptible de se raccorder sur la fixation (14) et/ou sur l'unité de montage (12) et/ou sur le module d'interface (16), alors qu'il est prévu de préférence que le module d'interface (16) sur lequel la fixation (14) et/ou l'unité de montage (12) est susceptible de se raccorder via la télécommande sans fil soit conçu sous la forme d'un module d'interface, de préférence d'un appareil de commande, d'un module d'interface (16) d'ores et déjà présent dans le véhicule automobile, par exemple pour le fonctionnement d'un autoradio, d'un téléviseur, d'un système de navigation, d'Internet ou d'un système de communication, comme par exemple Telematic.

20. Installation mains libres selon l'une quelconque des revendications 1 à 19,
**caractérisée en ce que**,
la fixation (14) ou l'unité de montage (12) est susceptible de se raccorder sur un module d'interface (16) installable dans le véhicule automobile, avec de préférence des données spécifiques au véhicule mémorisées sur un microprocesseur, qui est équipée d'une reconnaissance vocale pour la commande vocale non seulement de l'installation mains libres, mais également d'autres fonctions dans le véhicule automobile, **en ce que** le module d'interface équipé de la reconnaissance vocale est conçu sous la forme d'un module d'interface, de préférence d'un appareil de commande d'ores et déjà présent dans le véhicule automobile, par exemple pour le fonctionnement d'un autoradio, d'un téléviseur, d'un système de navigation, d'Internet ou d'un système de communication, comme par exemple Telematic .

21. Installation mains libres selon l'une quelconque des revendications 1 à 20,
**caractérisée en ce que**,
il est prévu plusieurs fixations (14) et/ou dispositifs de montage (12) comportant chacun un microprocesseur, qui sont susceptibles de se raccorder sur un bus (22) en un module d'interface (16) installable en commun dans le véhicule automobile, comportant de préférence un microprocesseur.

22. Installation mains libres selon l'une quelconque des revendications 1 à 21,
**caractérisée en ce que**,
pour la liaison du microprocesseur de la fixation (14), respectivement de l'unité de montage (12) avec le microprocesseur du module d'interface (16), il est prévu un bus qui est conçu de préférence sous la forme d'un bus immatériel sans fil.

23. Installation mains libres selon l'une quelconque des revendications 1 à 22,
**caractérisée en ce que**,
il est prévu une liaison par fiche sans fil (12b) entre la fixation (14) et l'unité de montage (12), et ou **en ce qu'**il est prévu un liaison par fil (18) avec connecteur (29) entre la fixation (14) et l'unité de montage (12) ou **en ce qu'**il n'est prévu aucune liaison électrique entre la fixation (14) et l'unité de montage (12), mais une liaison par fil avec connecteur entre la fixation (14) et le module d'interface (16).

24. Installation mains libres selon l'une quelconque des revendications 1 à 23,
**caractérisée en ce que**,
l'unité de montage (12) et/ou le dispositif calculateur et/ou de mémoire et/ou d'affichage susceptible de se raccorder sur l'unité de montage (12) et/ou sur la fixation (14) et/ou sur le module d'interface (16) comporte une console (12) ou similaire, susceptible d'être montée de façon stationnaire dans le véhicule automobile, la console (12) étant susceptible d'être montée de préférence sur le tableau de bord ou sur la console centrale ou sur l'accoudoir ou dans la boîte à gants ou dans ou sur l'une des portières, de préférence sur la face intérieure d'une portière du véhicule.

25. Installation mains libres selon la revendication 24,
**caractérisée en ce que**,
la console (12) comporte une face de fixation adaptée au point de fixation sur le tableau de bord, sur la console centrale ou sur l'accoudoir.

26. Installation mains libres selon la revendication 24 ou 25,
**caractérisée en ce que**,
la fixation (14) conçue pour le logement temporaire du téléphone mobile est susceptible d'être reliée temporairement avec la console.

27. Installation mains libres selon l'une quelconque des revendications 1 à 26,
**caractérisée en ce que**,
la fixation (14) est conçue sous la forme d'un logement adapté au téléphone mobile, de préférence en forme de coque, pour le logement temporaire du téléphone mobile.

28. Installation mains libres selon l'une quelconque des revendications 1 à 27,
**caractérisée en ce que**,
la fixation (14) comporte un branchement électrique pour le téléphone mobile et de préférence une unité de
commande, notamment avec microprocesseur.

29. Véhicule automobile, avec installé en son intérieur une installation mains libres selon l'une quelconque des revendications 1 à 28.
